**Europäisches Patentamt**

**European Patent Office**

**Office européen des brevets**

(11) Veröffentlichungsnummer: **0 008 776**
**B1**

(12) **EUROPÄISCHE PATENTSCHRIFT**

(45) Veröffentlichungstag der Patentschrift:
06.01.82

(51) Int. Cl.³: **F 16 L 11/12,** A 01 J 7/00

(21) Anmeldenummer: 79103215.4

(22) Anmeldetag: 30.08.79

(54) Melkschlauch.

(30) Priorität: 05.09.78 DE 2838659

(43) Veröffentlichungstag der Anmeldung:
19.03.80 Patentblatt 80/6

(45) Bekanntmachung des Hinweises auf die Patenterteilung:
06.01.82 Patentblatt 82/1

(84) Benannte Vertragsstaaten:
AT BE CH IT NL SE

(56) Entgegenhaltungen:
DD-B-41 115
DE-A-1 675 341
DE-B-1 190 271
DE-U-1 966 868
FR-A-773 584
FR-A-1 596 607
GB-A-1 123 331
US-A-3 693 664

(73) Patentinhaber: BIO-MELKTECHNIK SWISS Hoefelmayr & Co., Steinwichslenstrasse 20, CH-9052 Niederteufen (CH)

(72) Erfinder: Hoefelmayr, Tilman, Dr.,
Steinwichslenstrasse 20, CH-9052 Niederteufen (CH)

(74) Vertreter: Patentanwälte Dipl.-Ing. A. Grünecker, Dr.-Ing. H. Kinkeldey, Dr.-Ing. W. Stockmair,, Dr. rer. nat. K. Schumann, Dipl.-Ing. P.H. Jakob, Dr. rer. nat. G. Bezold Maximilianstrasse 43, D-8000 München 22 (DE)

## Melkschlauch

Die Erfindung betrifft eine Schlauchanordnung mit wenigstens vier parallel zueinander verlaufenden, zusammengehaltenen Schlauchleitungen für eine Viertelgemelksmaschine.

Aufgrund von nicht einzudämmenden Eutererkrankungen wurde mit zunehmendem Maße der Ruf nach der Einführung einer Viertelgemelksmaschine laut. Solche Viertelgemelksmaschinen sind bereits zu wissenschaftlichen Untersuchungen verwandt worden, um die Leistungsfähigkeit der einzelnen Zitzen getrennt untersuchen zu können.

Die Schwierigkeit der Viertelgemelksmaschinen besteht jedoch darin, daß vier Schläuche für die getrennte Abführung der Milch aus den einzelnen Zitzen notwendig sind und daß bei dem Betrieb von vier Melkbechern im Wechseltakt zusätzlich noch zwei Pulsatorunterdruckleitungen zugeführt werden müssen. Dies führt zu einem Wirrwarr von Schläuchen und oft zu einer erheblichen Krafteinwirkung auf das Sammelstück, insbesondere dann, wenn die Schläuche sich durch eine ungünstige gegenseitige Lage versteifen. Dies kann dazu führen, daß die einzelnen Zitzen unterschiedlich stark ausgemolken werden und es kann weiterhin gerade am Ende eines Ausmelkvorganges dazu führen, daß Lufteinbrüche am Melkbecher auftreten und gegebenenfalls die Melkbecher selbst abfallen.

Aus der DDR-Patentschrift 41 115 war bereits eine Viertelgemelksmaschine bekannt, bei der von dem Milchsammelbehälter zu einem Viertelgemelkssammelstück vier Milchabführschlauchleitungen sowie zwei Pulsatordruckschlauchleitungen führen. Um das entstehende Schlauchgewirr etwas zu ordnen, sind zwischen dem Viertelgemelkssammelstück und dem Milchsammelbehälter die Schläuche jeweils im Abstand durch Klemmhalterungen zusammengefaßt. Hierdurch wird zwar das Schlauchgewirr einigermaßen geordnet, jedoch findet häufig dann, wenn die Schläuche aus ihrer ursprünglichen Lage, in der sie durch die Klemmhalterungen zusammengefaßt wurden, abgebogen werden, eine Versteifung der gesamten Schlauchanordnung statt oder es springen Schläuche aus dem Bündel von Schläuchen heraus. Dabei erhöht sich jedoch die Gefahr der Verschmutzung der Schläuche zwischen den Klemmhalterungen, und es müssen jeweils am Ende eines Melkvorganges zur Reinigung der Schläuche die Klemmhalterungen abgenommen werden. Geht man aber andererseits dazu über, die Klemmhalterungen in einem geringeren Abstand über die Schlauchanordnung vorzusehen, so verringert sich die Gefahr der Verschmutzung der Außenfläche der Schläuche, jedoch ergibt sich bei abnehmendem gegenseitigen Abstand der Klemmhalterungen eine zunehmende Gesamtversteifung der Schlauchanordnung, die schließlich dazu führt, daß zwischen dem Milchsammelbehälter und dem Viertelgemelkstück eine Schlauchanordnung erhalten wird, die sowohl aufgrund ihrer Steifigkeit wie auch aufgrund ihres hohen Gewichtes als Schlauchverbindung nicht mehr tragbar ist.

Aus der britischen Patentschrift 1 123 331 war bereits eine Schlauchanordnung bekannt, bei der mehrere Schlauchleitungen parallel zueinander und in einer Ebene liegend entlang ihrer Längsseiten miteinander verbunden sind, oder bei der drei Schlauchleitungen derart angeordnet sind, daß ihre Mittellängsachsen an den Ecken eines Dreiecks liegen und ihre Außenflächen miteinander verbunden sind. Die Schlauchanordnungen dienen zum Durchleiten von voneinander getrennten Flüssigkeiten oder Gas durch je eine Schlauchleitung. Auf eine besonders kompakte und dennoch flexible Anordnung der Schläuche kommt es hierbei nicht an.

Aus der US-A-2 653 576 ist bereits eine Melkmaschine mit vier sogenannten Zweiraummelkbechern bekannt, bei der die Melkbecher über einen gemeinsamen Melkschlauch mit einem Milchsammelbehälter und einer Steuervorrichtung für die Pulsation in den einzelnen Melkbechern verbunden sind. Der Melkschlauch ist aus einem Stück geformt und weist fünf Durchleitungen auf, die im Querschnitt des Schlauchs an den Stellen entsprechend den fünf Punkten auf einem Würfel angeordnet sind. Die mittlere Durchleitung bildet dabei die Milchabführleitung während die übrigen vier Durchleitungen für die Weiterleitung des Pulsatordrucks bestimmt sind. Der Melkschlauch bildet also keinen, für eine Viertelgemelksmaschine verwendbaren Melkschlauch. Der Melkschlauch selbst ist aufgrund seiner Ausgestaltung äußerst steif und unflexibel.

Aus der FR-A-1 598 607 ist auch bereits ein Schlauch bestehend aus mehreren Leitungen zur Durchleitung von Flüssigkeiten bekanntgeworden. Der bekannte Schlauch besteht jeweils aus mehreren Einzelschläuchen, deren Querschnittsform, etwa in Form von Kreissektoren, derart gewählt sind, daß sie zu einer möglichst kompakten Einheit, etwa einem Kreisquerschnitt zusammengefügt und mit einer besonderen Ummantelung zusammengehalten werden können. Diese Anordnung bringt eine besondere Versteifung des Gesamtschlauches mit sich, so daß er nahezu unflexibel und als Melkschlauch nicht geeignet ist.

Der vorliegenden Erfindung liegt die Aufgabe zugrunde, eine Anordnung von zu einem Viertelgemelkssammelstück führenden Milchabführschlauchleitungen anzugeben, die kompakt und leicht zu reinigen ist und die dennoch möglichst flexibel und von Gewicht leicht ist.

Diese Aufgabe wird ausgehend von einer Schlauchanordnung der eingangs erwähnten Art erfindungsgemäß dadurch gelöst, daß die Mittellängsachsen der Milchabführschlauchleitungen im wesentlichen an den Ecken eines Rhombus liegen und ihr Zusammenhalt dadurch gewährleistet ist, daß die einander zugewandten Außenflächen der Milchabführschlauchleitungen über ihre gesamte Länge derart miteinander verbunden sind, daß jeweils zwischen drei Milchabführschlauchleitungen ein getrennter Zwischenraum gebildet wird, der zur Pulsationsleitung heranziehbar ist.

Durch die erfindungsgemäße Schlauchanordnung wird ein aus mehreren Milchabführschlauchleitungen bestehender einheitlicher Gesamtmelkschlauch gebildet, der im Querschnitt eine etwa rautenförmige oder rhombische Gestalt hat. Der Melkschlauch kann mit einem Handgriff gleichzeitig auf mehrere entsprechend nebeneinander angeordnete Stutzen des Viertelgemelkssammelstücks gesteckt werden, was die Handhabung wesentlich vereinfacht. Aufgrund der besonderen Ausgestaltung ergibt sich insgesamt ein besonders kompakter Melkschlauch, der gut in der Hand des Melkers liegt. Die Schlauchanordnung hat aber trotz ihrer kompakten Anordnung eine äußerst günstige Flexibilität, insbesondere bei einer Verdrehung der Schlauchanordnung um ihre Längsachse, was letztlich offensichtlich mit darauf zurückzuführen ist, daß jeweils zwischen drei Milchabführschlauchleitungen ein getrennter Hohlraum verbleibt. Durch diese Anordnung wird gleichzeitig das Gewicht der Schlauchanordnung auf ein Minimum reduziert, obwohl weiterhin der wesentliche Vorteil erhalten wird, daß die Oberfläche der Schlauchanordnung leicht zu reinigen ist, da sich nur in Längsrichtung durchlaufend freiliegende zusammenhängende Flächen ergeben. Aufgrund seiner besonderen Flexibilität übt der Melkschlauch lediglich einen dem Verlauf der Zitzen entsprechenden schräg nach abwärts gerichteten Zug auf das Viertelgemelkssammelstück aus, wodurch die Gefahr eines Abfallens von Melkbechern beseitigt ist.

Vorzugsweise wird eine Schlauchanordnung verwandt, die im Strangpreßverfahren in einem Stück hergestellt ist.

Im folgenden soll die Erfindung näher anhand von in der Zeichnung dargestellten vorzugsweisen Ausführungsbeispielen erläutert werden. In der Zeichnung zeigt

Fig. 1 einen Querschnitt durch eine erste Ausführungsform eines gemäß der Erfindung ausgebildeten Schlauchs, und

Fig. 2 eine zweite Ausführungsform eines nach der Erfindung ausgebildeten Schlauchs.

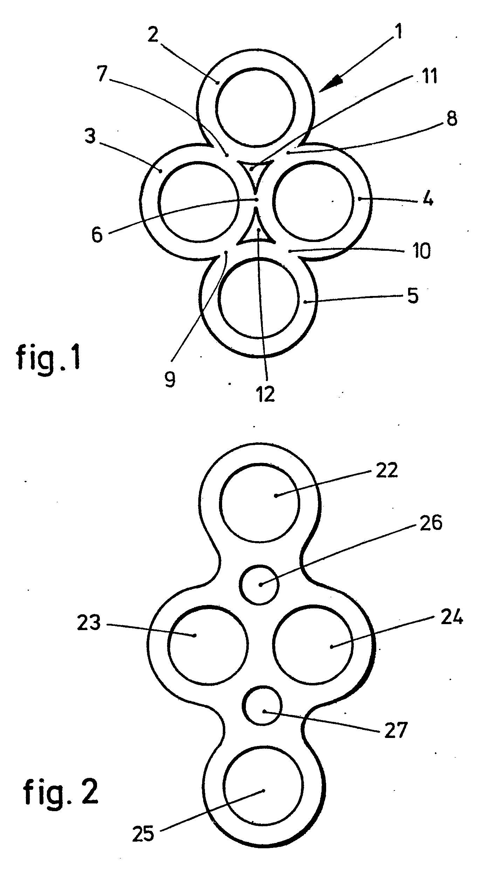

In Fig. 1 ist mit 1 eine Ausführungsform eines Melkschlauchs allgemein bezeichnet. Der Schlauch besteht aus vier im Querschnitt etwa gleichen Schläuchen 2, 3, 4 und 5, die derart miteinander verbunden gedacht sein können, daß die Schläuche 3 und 4 entlang einer gemeinsamen Längslinie 6 miteinander verbunden sind. Die Schläuche 2 und 5 können sodann auf der Verbindungslinie 6 an einander gegenüberliegenden Seiten jeweils mit den Schläuchen 3 und 4 entlang zweier Verbindungslinien 7 und 8 bzw. 9 und 10 verbunden sein. Die Verbindungslinien 6 bis 10 können insgesamt sehr dünn ausgebildet sein, so daß sich der Vorteil ergibt, daß die Linien bei Bedarf in Längsrichtung der einzelnen Schläuche getrennt werden können, so daß gegebenenfalls an den Enden des Melkschlauches 1 die einzelnen Schläuche 2 bis 5 getrennt mit anderen Leitungen verbunden werden können. Bei der in Fig. 1 gezeigten Anordnung ergibt sich der weitere Vorteil, daß der im Querschnitt im wesentlichen dreieckförmige, zwischen den Verbindungen 6, 7 und 8 bzw. zwischen den Verbindungen 6, 9 und 10 liegende Raum jeweils als eine zusätzliche Leitung 11 bis 12 verwandt werden kann. Diese Leitungen können beispielsweise zur Durchleitung des Pulsatordrucks verwandt werden. Es ergibt sich in diesem Falle eine äußerst kompakte, jedoch noch äußerst flexible Schlauchanordnung mit insgesamt sechs Zuleitungen bzw. Ableitungen. Zur besseren Verbindung der Pulsatordruckanschlußleitungen müssen diese gegebenenfalls an ihren Enden der Form der Leitungen 11 und 12 angepaßt werden.

In Fig. 2 ist eine weitere Ausführungsform dargestellt, bei der vier Milchableitungsrohre 22 bis 25 mit etwa gleichem Querschnitt und zwei Pulsatordruckleitungsrohren 26 und 27 mit gleichem Querschnitt, jedoch gegenüber dem Querschnitt der Rohre 22 bis 25 verminderten Querschnitt, vorgesehen sind. Die Rohre sind vorzugsweise in einem Stück stranggepreßt, wobei die Mittelpunkte der Rohre 22, 26, 27 und 25 in einer gemeinsamen Ebene liegen, während die Mittelpunkte der Rohre 22 und 24 in einer zweiten gemeinsamen Ebene liegen, die auf der ersten Ebene senkrecht steht. Weiterhin sind die Mittelachsen der Rohre 22 bis 25 so angeordnet, daß sie an den Ecken eines Rhombus liegen. Dieser Schlauch eignet sich besonders gut, um an einem Sammelstück in Form eines Blocksteckkontaktes insgesamt befestigt zu werden.

Wird der Melkschlauch in einem Stück extrudiert, so sollte der Schlauch vorzugsweise aus einem Material bestehen, das elastisch deformierbar ist und eine geringe bleibende Verformung aufweist.

**Patentansprüche**

1. Schlauchanordnung (1) mit wenigstens vier parallel zueinander verlaufenden, zusammengehaltenen Schlauchleitungen (2 bis 5; 22 bis 25) für eine Viertelgemelksmaschine, dadurch gekennzeichnet, daß die Mittellängsachsen der Milchabführschlauchleitungen (2 bis 5; 22 bis 25) im wesentlichen an den Ecken eines Rhombus liegen und ihr Zusammenhalt dadurch gewährleistet ist, daß die einander zugewandten Außenflächen der Milchabführschlauchleitungen über ihre gesamte Länge derart miteinander verbunden sind, daß jeweils zwischen drei Milchabführschlauchleitungen ein getrennter Zwischenraum (11, 12; 26, 27) gebildet wird, der zur Pulsationsleitung heranziehbar ist.

2. Schlauchanordnung nach Anspruch 1, dadurch gekennzeichnet, daß die Schlauchanordnung (1) im Strangpreßverfahren in einem Stück hergestellt ist.

## Claims

1. A hose arrangement (1) of at least four hose pipes (2 to 5; 22 to 25) held together to run in parallel with one another, for a quarter milking machine, characterised in that the longitudinal centre lines of the milk outlet hose pipes (2 to 5; 22 to 25), lie essentially at the corners of a rhombus and their cohesion is guaranteed by the fact that the outer surfaces of the milk outlet hose pipes, facing one another, are connected together along their whole length in such a way that between every three milk outlet hose pipes a separate space (11, 12; 26, 27) is formed, which can be made use of for the pulsator pipe.

2. A hose arrangement as in claim 1, characterised in that the hose arrangement (1) is produced in one piece by the method of extrusion.

## Revendications

1. Système à tuyaux souples (1) comportant au minimum quatre tuyauxc souples (2 à 5; 22 à 25) réunis parallèlement les uns aux autres pour une trayeuse au quart, caractérisé par le fait que les axes centraux longitudinaux des tuyaux souples d'évacuation du lait (2 à 5; 22 à 25) se situent pratiquement dans les angles d'un losange et que la cohésion de l'ensemble formé par ces tuyaux est assurée par le fait que les faces extérieures de ces tuyaux qui sont tournées les unes vers les autres sont sur toute leur longueur réunies entre elles de façon telle qu'entre deux tuyaux souples d'évacuation du lait, soit réservé un espace intermédiaire distinct (11, 12; 26, 27) utilisable comme conduite de pulsation.

2. Système de tuyaux souples conforme à la revendication 1, caractérisé par le fait que le système de tuyaux souples (1) est fabriqué d'une seule pièce par un procédé d'extrusion à la presse.

fig.1

fig. 2